# EUROPEAN PATENT APPLICATION

(11) **EP 4 819 247 A1**
(43) Date of publication of application: **07.10.2026**
(21) Application number: 24897407.3
(22) Date of filing: 20.11.2024
(51) Int. Cl.: H01M 4/62, C08L 1/12

(54) **BINDER FOR NONAQUEOUS ELECTROLYTE SECONDARY BATTERY ELECTRODE, ELECTRODE COMPOSITION FOR NONAQUEOUS ELECTROLYTE SECONDARY BATTERY, ELECTRODE FOR NONAQUEOUS ELECTROLYTE SECONDARY BATTERY, AND NONAQUEOUS ELECTROLYTE SECONDARY BATTERY**

(30) Priority: 29.11.2023 JP 2023201977
(71) Applicant: Nippon Paper Industries Co., Ltd., Tokyo 114-0002 (JP)
(72) Inventor: SAKAJIRI Takayuki, Tokyo 114-0002 (JP); INOUE Kazuhiko, Tokyo 114-0002 (JP); NISHIDE Daisuke, Tokyo 114-0002 (JP); NAKANO Haruna, Tokyo 114-0002 (JP)
(74) Representative: Kuhnen & Wacker Patent- und Rechtsanwaltsbüro PartG mbB
(86) International application number: PCT/JP2024/041112
(87) International publication number: WO 2025/115721

(57) **Abstract**

This binder for a nonaqueous electrolyte secondary battery electrode comprises component A and component B, where the combination ratio of the components in the binder for a nonaqueous electrolyte secondary battery electrode, i.e., component A/component B, is 90/10 to 55/45. Component A is a carboxymethylcellulose and/or a salt thereof, an aqueous 1 mass% solution of component A having a viscosity of 1,000 to 20,000 mPa•s as determined by a type B viscometer (30 rpm) at 25°C. Component B is a carboxymethylcellulose and/or salt thereof, an aqueous 1 mass% solution of component B having a viscosity of 1 to 500 mPa•s as determined by a type B viscometer (30 rpm) at 25°C.

## Description

### Technical Field

The present invention relates to a binder for a nonaqueous electrolyte secondary battery electrode, an electrode composition for a nonaqueous electrolyte secondary battery, an electrode for a nonaqueous electrolyte secondary battery, and a nonaqueous electrolyte secondary battery.

### Background Art

In recent years, with the rapid spread of small portable terminals typified by smartphones, tablets, and the like, and stationary storage batteries, there is an increasing demand for small and high energy density batteries for driving them.

In general, a graphite-based material is used for a negative electrode of a lithium ion secondary battery. The theoretical capacity of the graphite-based material is 372 mAh/g (LiC₆), and at present, the capacity is approaching this theoretical limit.

To further improve the energy density of the lithium ion secondary battery, it is necessary to select a new material. Thus, materials obtained by alloying lithium with silicon, tin, or the like having the second lowest potential after carbon and lithium and having a large specific capacity have attracted attention.

Among these materials, silicon can occlude up to 4.4 lithium atoms with respect to 1 silicon atom in a mole ratio, and theoretically has a capacity about 10 times that of the graphite-based carbon material. However, when the silicon particles occlude lithium, the volume of the silicon particles swells to about three to four times, and therefore degradation progresses through repetition of charging and discharging, and there is a problem that the capacity decreases. When this phenomenon is analyzed in detail, it has been confirmed that when lithium is inserted into an active material containing silicon, fine cracks are generated in the electrode because of volume expansion, the electrolytic solution enters the fine cracks, and a new coating (SEI layer) is formed. At this time, irreversible capacity that does not return to the original capacity is generated, and as a result, the battery capacity decreases. This phenomenon appears in a change in charge-discharge efficiency during the cycle. In particular, the decrease in the cycle efficiency at the initial stage of the cycle where the volume change is large has a great influence on the life as a battery in which a positive electrode having high charge-discharge efficiency is combined. Thus, it is an important problem to minimize a change in the electrode structure due to the volume expansion when an active material containing silicon is used.

In view of such circumstances, in Patent Literature 1, a binder containing three components, carboxymethyl cellulose or a metal salt thereof, polyacrylic acid or a metal salt thereof, and styrene-butadiene rubber or polyvinylidene fluoride, as essential components is used to improve battery characteristics. However, according to Examples and Comparative Examples of Patent Literature 1, when only two components (carboxymethyl cellulose and styrene-butadiene rubber, or carboxymethyl cellulose and polyvinylidene fluoride) have been used as the binder, desired battery characteristics have not been obtained.

### Citation List

### Patent Literature

Patent Literature 1: JP 2015-198038 A

### Summary of Invention

### Technical Problem

In Patent Literature 1, three components including carboxymethyl cellulose or a metal salt thereof are essential as the binder, but physical properties of carboxymethyl cellulose or a metal salt thereof are not particularly described. According to the study conducted by the inventors of the present invention, it has been found that the physical properties affect the adhesion strength between the active material and current collectors and the dispersibility of the active material and conductive additives. When the adhesion strength between the active material and current collectors and the dispersibility of the active material and conductive additives improve, the battery characteristics also improve.

That is, an object of the present invention is to provide a binder for a nonaqueous electrolyte secondary battery electrode having a desired adhesion strength between an active material and a current collector and having good dispersibility of the active material and a conductive additive, and to provide an electrode composition for a nonaqueous electrolyte secondary battery, an electrode for a nonaqueous electrolyte secondary battery, and a nonaqueous electrolyte secondary battery, using the binder for a nonaqueous electrolyte secondary battery electrode.

### Solution to Problem

As a result of earnest efforts, the inventors of the present invention have found that the problem can be solved by the following [1] to [6].

That is, the present invention provides the following [1] to [6].
[1] A binder for a nonaqueous electrolyte secondary battery electrode, the binder including: a component A: carboxymethyl cellulose and/or a salt thereof having a viscosity of a 1 mass% aqueous solution of 1000 to 20,000 mPa·s as measured with a B-type viscometer (30 rpm) at 25°C and a molecular weight of 6,000,000 or more; and a component B: carboxymethyl cellulose and/or a salt thereof having a viscosity of a 1 mass% aqueous solution of 1 to 500 mPa·s as measured with a B-type viscometer (30 rpm) at 25°C, wherein a blending ratio of the component A and the component B in the binder for a nonaqueous electrolyte secondary battery electrode is the component A/the component B = 90/10 to 55/45.
[2] The binder for a nonaqueous electrolyte secondary battery electrode according to [1], wherein a degree of carboxymethyl substitution per anhydroglucose unit of each of the component A and the component B is 0.5 to 1.2.
[3] The binder for a nonaqueous electrolyte secondary battery electrode according to [1], wherein the component B has a dispersion degree of 20 to 60% as measured using a powder tester.
[4] An electrode composition for a nonaqueous electrolyte secondary battery, the electrode composition including the binder for a nonaqueous electrolyte secondary battery electrode according to [1].
[5] An electrode for a nonaqueous electrolyte secondary battery, the electrode including the binder for a nonaqueous electrolyte secondary battery electrode according to [1].
[6] A nonaqueous electrolyte secondary battery including the binder for a nonaqueous electrolyte secondary battery electrode according to [1].

### Advantageous Effects of Invention

The present invention can provide a binder for a nonaqueous electrolyte secondary battery electrode having a desired adhesion strength between an active material and a current collector and having good dispersibility of the active material and a conductive additive, and can provide an electrode composition for a nonaqueous electrolyte secondary battery, an electrode for a nonaqueous electrolyte secondary battery, and a nonaqueous electrolyte secondary battery, using the binder for a nonaqueous electrolyte secondary battery electrode.

### Description of Embodiments

Hereinafter, a binder for a nonaqueous electrolyte secondary battery electrode of the present invention will be described. A binder for a nonaqueous electrolyte secondary battery electrode of the present invention includes: a component A: carboxymethyl cellulose and/or a salt thereof having a viscosity of a 1 mass% aqueous solution of 1000 to 20,000 mPa·s as measured with a B-type viscometer (30 rpm) at 25°C and a molecular weight of 6,000,000 or more; and a component B: carboxymethyl cellulose and/or a salt thereof having a viscosity of a 1 mass% aqueous solution of 1 to 500 mPa·s as measured with a B-type viscometer (30 rpm) at 25°C, wherein a blending ratio of the component A and the component B in the binder for a nonaqueous electrolyte secondary battery electrode is the component A/the component B = 90/10 to 55/45.

### <Component A: carboxymethyl cellulose and/or a salt thereof having viscosity of 1 mass% aqueous solution of 1,000 to 20,000 mPa·s>

### (Viscosity)

One type (component A) of the carboxymethyl cellulose or a salt thereof (hereinafter, it may be abbreviated as CMC) constituting the present invention has a viscosity of a 1 mass% aqueous solution of, preferably 1,000 to 20,000 mPa·s, more preferably 1,000 to 15,000 mPa·s, still more preferably 1,000 to 10,000 mPa·s, as measured with a B-type viscometer (30 rpm) at 25°C. When the viscosity is 1,000 to 20,000 mPa·s, a slurry having a viscosity suitable for coating can be obtained. It is also possible to prevent the structure of the coating layer from being broken because of expansion and shrinkage of the coating layer during charging and discharging.

The method for measuring the viscosity in the present invention is as follows:
Weigh carboxymethyl cellulose or a salt thereof in a 1000 mL glass beaker and disperse it in 900 mL of distilled water to prepare an aqueous dispersion having a solid content of 1% (w/v). Stirr the aqueous dispersion at 25°C using a stirrer at 600 rpm for 3 hours. Thereafter, measure the viscosity after 3 minutes under the conditions of No. 1 rotor and a rotation speed of 30 rpm using a B-type viscometer (manufactured by Toki Sangyo Co., Ltd.) according to the method of JIS-Z-8803.

### (Molecular weight)

The molecular weight of the component A is 6,000,000 or more, preferably 7,000,000 or more, more preferably 8,000,000 or more, and preferably 15,000,000 or less, more preferably 13,000,000 or less, still more preferably 12,000,000 or less.

The molecular weight can be measured through the following gel permeation chromatography analysis.

Specifically, produce a 1 mass% CMC solution, and collect 1 g from the CMC solution. Subsequently, 10 mL of ultrapure water was added, and then 10 mL of a 400 mM sodium nitrate aqueous solution was added to make a measurement sample.

The measurement sample was set in HLC-8320GPC (manufactured by Tosoh Corporation). As the column, two TSKgelGMPWxl and one G2500PWxl manufactured by Tosoh Corporation were used. As an eluent, a 200 mM sodium nitrate aqueous solution was used. The flow rate was set to 1 mL/min, the column temperature was set to 50°C, and the injection amount was set to 100 µL, and measurement was performed. Pullulan (manufactured by Resonac Holdings Corporation) was used as a standard sample.

### <Component B: carboxymethyl cellulose and/or salt thereof having viscosity of 1 mass% aqueous solution of 1 to 500 mPa·s >

### (Viscosity)

The viscosity of a 1 mass% of aqueous solution of one type (component B) of the carboxymethyl cellulose or a salt thereof constituting the present invention is preferably 1 to 500 mPa·s, more preferably 5 to 300 mPa·s, still more preferably 10 to 100 mPa·s, as measured with a B-type viscometer (30 rpm) at 25°C. When the viscosity is 1 to 500 mPa·s, the dispersibility of the active material and the conductive additive improves.

The method for measuring the viscosity is as described above.

### (Molecular weight)

The molecular weight of the component B is preferably 100,000 or more, more preferably 200,000 or more, still more preferably 300,000 or more, and preferably 1 million or less, more preferably 800,000 or less, still more preferably 500,000 or less. The method for measuring the molecular weight is as described above.

### <Physical property of carboxymethyl cellulose and/or salt thereof as components A and B other than viscosity>

The physical properties of the carboxymethyl cellulose and/or a salt thereof as the components A and B other than the viscosity will be described below in terms of their forms. The physical properties other than the viscosity are not necessarily the same, and they may be different between the carboxymethyl cellulose and/or a salt thereof as the component A and the carboxymethyl cellulose and/or a salt thereof as the component B.

The carboxymethyl cellulose and/or a salt thereof constituting the present invention has a structure in which a hydroxyl group in a glucose unit constituting cellulose is substituted with a carboxymethyl ether group. The carboxymethyl cellulose may be in the form of a salt. Examples of the salt of carboxymethyl cellulose include metal salts such as carboxymethyl cellulose sodium salt.

### (Cellulose raw material)

In the present invention, cellulose means a polysaccharide having a structure in which D-glucopyranose (it is also simply referred to as "glucose unit" or "anhydroglucose") is linked by β,1-4 bonds. Cellulose is generally classified into natural cellulose, regenerated cellulose, fine cellulose, microcrystalline cellulose excluding an amorphous region, and the like from origin, production method, and the like.

Examples of the natural cellulose include bleached or unbleached pulp, purified lint, and cellulose produced by microorganisms such as acetic acid bacteria. The raw material of the bleached or unbleached pulp is not particularly limited, and examples thereof include wood, cotton, straw, and bamboo. The method for producing the bleached or unbleached pulp is not particularly limited, and examples include a mechanical method, a chemical method, and a method in which a mechanical method and a chemical method are combined. Examples of the bleached or unbleached pulp include mechanical pulp, chemical pulp, groundwood pulp, sulfite pulp, Kraft pulp, and paper pulp. Examples of the bleached or unbleached pulp also include a dissolving pulp which is chemically purified and mainly used by being dissolved in chemicals. The dissolving pulp is mainly used as a main raw material for artificial fibers, cellophane, and the like.

Examples of the regenerated cellulose include regenerated cellulose obtained by dissolving cellulose in a solvent such as a copper ammonia solution, a cellulose xanthate solution, or a morpholine derivative, and spinning the cellulose again.

Examples of the fine cellulose include fine cellulose obtained by depolymerizing a cellulose-based material such as natural cellulose or regenerated cellulose through acid hydrolysis, alkaline hydrolysis, enzymatic decomposition, blasting treatment, vibration ball mill treatment, and the like and fine cellulose obtained by mechanically treating a cellulose-based material.

In producing CMC, a known method for producing CMC can be applied to one type of the carboxymethyl cellulose or a salt thereof constituting the present invention. For example, CMC can be produced by treating cellulose with a mercerizing agent (alkali) to prepare mercerized cellulose (alkali cellulose), and then adding an etherification agent to the mercerized cellulose to cause an etherification reaction.

As the cellulose as a raw material, the above-described cellulose can be used without particular limitation, but a cellulose having a high cellulose purity is preferable, and in particular, dissolving pulp or linter is more preferable. By using these, a high purity CMC can be obtained.

Examples of the mercerizing agent include alkali metal hydroxide salts such as sodium hydroxide and potassium hydroxide. Examples of the etherification agent include monochloroacetic acid and sodium monochloroacetate.

In a general method for producing a water-soluble carboxymethyl cellulose, the mole ratio between the mercerizing agent and the etherification agent (mercerizing agent/etherification agent) is generally 2.00 to 2.45 in a case where monochloroacetic acid is used as the etherification agent. The reason is that when the ratio is 2.00 or more, the etherification reaction can be sufficiently performed, and it is possible to prevent unreacted monochloroacetic acid from remaining and being wasted. When the ratio is 2.45 or less, it is possible to prevent the occurrence of a side reaction between an excessive mercerizing agent and monochloroacetic acid to produce an alkali metal glycolate, which is economical.

In the present invention, the CMC may be a commercially available product. Examples of the commercially available product include "SANROSE" manufactured by NIPPON PAPER INDUSTRIES CO., LTD.

In the present invention, the degree of etherification of CMC refers to the proportion of the group substituted with a carboxymethyl ether group (-OCH₂COOH) among hydroxyl groups (-OH) in the glucose unit constituting cellulose.

### (Degree of substitution of carboxymethyl group)

The carboxymethyl cellulose or a salt thereof constituting the present invention has a degree of substitution of carboxymethyl group per anhydroglucose unit (hereinafter, it may be referred to as DS value) of 0.5 to 1.2. When the DS value is 0.5 or more, good solubility in water can be maintained, and generation of undissolved matter can be suppressed. When the DS value is 1.2 or less, an increase in the stringiness of the liquid can be suppressed, and the handling can be easily maintained. Thus, the DS value of the CMC of the present invention is 0.5 to 1.2, preferably 0.5 to 1.0, still more preferably 0.6 to 1.0.

The method for measuring the degree of substitution of carboxymethyl group is as follows:
Precisely weigh about 2.0 g of a sample and place it in a 300 mL conical flask having a stopper. Add a solution in an amount of 100 mL obtained by adding 100 mL of special grade concentrated nitric acid to 1000 mL of methanol, and shake the mixture for 3 hours to convert carboxymethyl cellulose salt (CMC) into H-CMC (hydrogen-type carboxymethyl cellulose). Precisely weigh the H-CMC that has been bone-dried in an amount of 1.5 to 2.0 g and put it into a 300 mL conical flask having a stopper. Wet the H-CMC with 15 mL of 80% methanol, add 100 mL of 0.1 N NaOH, and shake the mixture at room temperature for 3 hours. Using phenolphthalein as an indicator, back-titrated excess NaOH with 0.1N-H2SO4, and calculate the degree of carboxymethyl substitution (DS value) with the following formula. 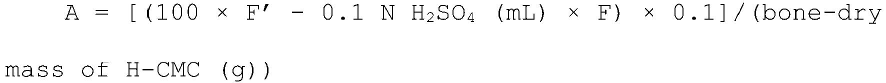 A = [(100 × F' - 0.1 N H2SO4 (mL) × F) × 0.1]/(bone-dry mass of H-CMC (g)) 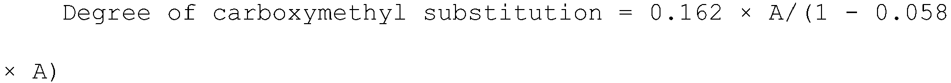 Degree of carboxymethyl substitution = 0.162 × A/(1 - 0.058 × A)
F': Factor of 0.1 N H₂SO₄
F: Factor of 0.1 N NaOH

### (Dispersion degree)

The carboxymethyl cellulose or the salt thereof constituting the present invention has a dispersion degree of 20 to 60%, preferably 25 to 55%, more preferably 30 to 50% as measured using a powder tester. When the dispersion degree is within the range, good dispersibility is exhibited when CMC is used as a binder or a dispersant in a negative electrode composition, and thus, the electric resistance value is lowered. On the other hand, when the dispersion degree is too large, there is a problem that the amount of powder floating is increased, a predetermined amount of carboxymethyl cellulose cannot be dissolved, and the function as a binder or a dispersant in a negative electrode is deteriorated, which causes increase in electric resistance. When the dispersion degree is too small, there is a problem that mixing with other materials cannot be performed well, and electric resistance increases.

Here, as the method for measuring the dispersion degree, a powder property tester (Powder Tester PT-X (manufactured by Hosokawa Micron Corporation)) was used, and when 10 g of a sample was charged into the dispersion unit of PT-X and dropped, the dispersion degree was calculated from the amount of powder dropped on the watch glass by the following formula. 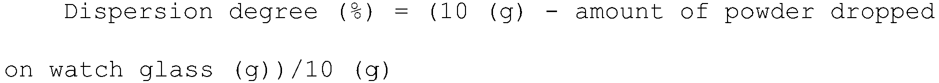 Dispersion degree (%) = (10 (g) - amount of powder dropped on watch glass (g))/10 (g)

### (Filtration residue amount)

The carboxymethyl cellulose or a salt thereof constituting the present invention preferably has a filtration residue amount in a predetermined range. That is, the carboxymethyl cellulose or a salt thereof has a ratio of a dry mass M to a dry mass m of preferably less than 200 ppm, still more preferably less than 50 ppm, where the dry mass M is a dry mass of a residue on a filter after filtration measured when 2 liters of a 0.3 mass% aqueous solution of the carboxymethyl cellulose or a salt thereof having the dry mass m is prepared and filtered through a 250 mesh filter under a reduced pressure condition of -200 mmHg.

When this value is too large, there is a problem that clogging is likely to occur when the electrode slurry is filtered, the amount of carboxymethyl cellulose in the filtered slurry becomes less than a predetermined amount, and the function as a binder or a dispersant deteriorates, which increases the electric resistance.

### (Particle size)

The particle size D10 of the carboxymethyl cellulose or a salt thereof constituting the present invention is preferably 1 to 10 µm, the particle size D50 is preferably 10 to 20 µm, and the particle size D90 is preferably 20 to 40 µm.

Here, D10 is a particle size including 10% of distribution, integrated from the minimum value in the particle size distribution with the volume average particle size, and D50 is a particle size including 50% of distribution, integrated from the minimum value. D50 is also referred to as an average particle size. D90 is a particle size including 90% of distribution, integrated from the minimum value. The particle size distribution based on the volume average particle size can be measured by a laser diffraction/scattering particle size distribution meter using, for example, methanol as a dispersant.

The value obtained by subtracting the particle size D10 from the particle size D90 of the carboxymethyl cellulose or a salt thereof constituting the present invention (particle size D90 - particle size D10) is preferably 10 to 50 µm, more preferably 10 to 30 µm, still more preferably 20 to 30 µm. When this value is too large, hole defects may occur in the negative electrode layer because of coarse undissolved substances in the particles.

The value obtained by subtracting the particle size D50 from the particle size D90 of the carboxymethyl cellulose and/or a salt thereof (particle size D90 - particle size D50) is preferably 5 to 30 µm, more preferably 10 to 30 µm, still more preferably 10 to 20 µm. When this value is too large, hole defects may occur in the negative electrode layer because of coarse undissolved substances in the particles.

The value obtained by subtracting the particle size D10 from the particle size D50 of the carboxymethyl cellulose and/or a salt thereof (particle size D50 - particle size D10) is preferably 5 to 20 µm, more preferably 5 to 15 µm, still more preferably 8 to 12 µm. When this value is too large, there is a problem that hole defects occur in the negative electrode layer because of undissolved substances in the particles.

### (Pulverization treatment)

In the present invention, the carboxymethyl cellulose or a salt thereof may be finely pulverized. As the method for finely pulverizing the carboxymethyl cellulose or a salt thereof, any of a dry pulverization method of treating the carboxymethyl cellulose or a salt thereof in a powder state and a wet pulverization method of treating the carboxymethyl cellulose or a salt thereof in a state of being dispersed or dissolved in a liquid may be selected.

By subjecting the carboxymethyl cellulose or a salt thereof to a dry or wet pulverization treatment mechanically, gel particles derived from the carboxymethyl cellulose or a salt thereof present as an undissolved product in the aqueous solution are micronized. It is considered that, as a result, it is possible to suppress coarse undissolved substances that cause streak defects, peeling, pinholes, and the like to be generated on the surface of the negative electrode.

Examples of the fine pulverizer that can be used in the present invention include the following.

Examples of the dry pulverizer include a cutting type mill, an impact type mill, and an airflow type mill. These can be used alone or in combination, and further, the treatment can be performed in several stages in the same model.

Examples of the cutting type mill include a mesh mill (manufactured by Horai Co., Ltd.), Atmos (manufactured by YAMAMOTO HYAKUMA MFG. CO., LTD.), a knife mill (manufactured by PALLMANN), a granulator (manufactured by Herbold), and a rotary cutter mill (manufactured by Nara Machinery Co., Ltd.).

Examples of the impact type mill include a pulverizer (manufactured by Hosokawa Micron Corporation), a fine impact mill (manufactured by Hosokawa Micron Corporation), a super micron mill (manufactured by Hosokawa Micron Corporation), a sample mill (manufactured by Seishin Enterprise Co., Ltd.), a bantam mill (manufactured by Seishin Enterprise Co., Ltd.), an atomizer (manufactured by Seishin Enterprise Co., Ltd.), a tornado mill (Nikkiso Co., Ltd.), a turbo mill (Turbo Kogyo Co., Ltd.), and a bevel impactor (manufactured by Aikawa Iron Works Co., Ltd.).

Examples of the airflow type mill include a CGS type jet mill (manufactured by Mitsui Kozan Kabushiki Kaisha), a jet mill (manufactured by Sansho Industry Co., Ltd.), EBARA jet micronizer (manufactured by Ebara Corporation), Ceren Miller (manufactured by Masuko Sangyo Co., Ltd.), and a supersonic jet mill (manufactured by Nippon Pneumatic Mfg. Co., Ltd.).

Examples of the medium mill include a vibration ball mill.

Examples of the wet pulverizer include Masscolloider (manufactured by Masuko Sangyo Co., Ltd.), a bead mill (manufactured by AIMEX CO., LTD.) as a medium mill, and a high-pressure homogenizer (manufactured by Sanmaru Machinery Co., Ltd.).

In the present invention, a step of classifying finely pulverized carboxymethyl cellulose or a salt thereof based on the size of the particle size can be provided.

The classification step may be provided during the fine pulverization step or may be provided after the fine pulverization. As the classification method, a known method may be used. Examples of the dry classifier include a cyclone classifier, a DS separator, a turbo classifier, a microseparator, and an air separator. On the other hand, examples of the wet classifier include a hydrocyclone type, a centrifugal precipitator, and a hydraulic separator.

### <Binder for nonaqueous electrolyte secondary battery>

In the binder for a nonaqueous electrolyte secondary battery (hereinafter, it may be referred to as "battery binder") of the present invention, the carboxymethyl cellulose and/or a salt thereof as the component A and the carboxymethyl cellulose and/or a salt thereof as the component B are preferably used at a blending ratio of component A/component B of 90/10 to 55/45, more preferably 90/10 to 60/40 based on solid content mass in the binder for a nonaqueous electrolyte secondary battery electrode. More preferably, the blending amount of the component A is 10 parts by mass or more and less than 25 parts by mass, and the blending amount of the component B is more than 75 parts by weight and 90 parts by mass or less with respect to 100 parts by mass of the total solid content mass of the component A and the component B. When the blending amounts are within the above ranges, not only the active material and the conductive additive are uniformly dispersed in the slurry, but also an electrode plate excellent in adhesion strength between the active material and the current collector can be obtained. In addition, the adhesion strength between active materials, between conductive additives, and between the active material and the conductive additive improves, and it is possible to obtain an electrode plate in which cracks are hardly generated in the coating layer.

The binder for a nonaqueous electrolyte secondary battery of the present invention may be an aqueous solution. The production conditions for such an aqueous solution are not particularly limited, and for example, the aqueous solution can be prepared by adding the electrode binder to water (for example, distilled water, purified water, tap water, and the like) and dissolving the electrode binder by stirring or the like as necessary. In addition, the carboxymethyl cellulose or a salt thereof may be dissolved in water or the like, then a borate salt may be added, and the borate salt may be dissolved by stirring or the like. Similarly, after borate salt is dissolved in water or the like, the carboxymethyl cellulose or a salt thereof can be dissolved by stirring or the like.

The pH of the aqueous solution of such a binder for nonaqueous electrolyte secondary battery is preferably in the range of 1 to 8, more preferably in the range of 2 to 8, still more preferably in the range of 3 to 8, and particularly preferably in the range of 6 to 8. When the pH of the aqueous solution is lean to the acidic side, it becomes difficult to exhibit the viscosity expected for the aqueous solution. Therefore, when the pH is in the range of 6 to 8, especially the balance between viscosity and solubility is achieved, and an aqueous solution excellent in coatability can be obtained.

The concentration of the carboxymethyl cellulose or a salt thereof in the aqueous solution of the carboxymethyl cellulose and/or a salt thereof is usually 0.1 to 10 mass%, preferably 0.2 to 4 mass%, more preferably 0.5 to 2 mass%.

In the aqueous solution of the binder for a nonaqueous electrolyte secondary battery, the viscosity of a 1 mass% aqueous solution measured with a B-type viscometer (30 rpm) at 25°C is preferably 400 mPa·s or more, more preferably 800 mPa·s or more, and is preferably 15,000 mPa·s or less, more preferably 10,000 mPa·s or less, still more preferably 8,000 mPa·s or less. When the aqueous solution of the binder for a nonaqueous electrolyte secondary battery is in the viscosity range described above, suitable dispersibility, thickening, and binding properties can be exhibited when the binder is added to an electrode composition.

The binder for a nonaqueous electrolyte secondary battery may contain other binders in addition to the carboxymethyl cellulose and/or a salt thereof as the component A and the component B. Examples of the binder used for the electrode composition for a negative electrode include a synthetic rubber-based binder. As the synthetic rubber-based binder, one or more selected from the group consisting of styrene-butadiene rubber (SBR), nitrile butadiene rubber, methyl methacrylate butadiene rubber, chloroprene rubber, carboxy-modified styrene-butadiene rubber, and latexes of these synthetic rubbers can be used. Among these, styrene-butadiene rubber (SBR) is preferable. Examples of the binder used in the electrode composition for a positive electrode include polytetrafluoroethylene (PTFE) in addition to the synthetic rubber-based binder described above as the binder for a negative electrode.

Here, the average particle size (D50) of SBR is preferably 50 to 300 nm, more preferably 50 to 200 nm. When the average particle size (D50) of SBR is too large, SBR does not uniformly adhere to the active material, the binder function degrades, and thus there is a problem that the electrical resistance increases. When the average particle size is too small, SBR covers the active material, and thus there is a problem that the electrical resistance increases.

The glass transition temperature (Tg) of SBR is preferably -50°C to 50°C. When the SBR is within the range described above, the SBR is mixed well with the carboxymethyl cellulose and/or a salt thereof of the present invention, and has appropriate flexibility when used as a negative electrode layer. Thus, the electrical resistance is less likely to increase.

### <Electrode composition for nonaqueous electrolyte secondary battery>

The electrode composition for a nonaqueous electrolyte secondary battery of the present invention (hereinafter, it may be referred to as "electrode composition") contains at least an electrode active material and two types of carboxymethyl cellulose and/or a salt thereof as the binder for a nonaqueous electrolyte secondary battery.

The content of the carboxymethyl cellulose and/or a salt thereof in the electrode composition is preferably 0.1 to 4.0 mass% with respect to the entire electrode composition.

When the above-described other binder is used, the content of the binder for a nonaqueous electrolyte secondary battery in the electrode composition is preferably 1 to 10 mass%, more preferably 1 to 6 mass%, still more preferably 1 to 2 mass%.

### (Electrode active material)

The electrode active material contained in the active material layer constituting the present invention is a negative electrode active material when the electrode for a nonaqueous electrolyte secondary battery is an electrode for a negative electrode, and is a positive electrode active material when the electrode is for a positive electrode.

Examples of the negative electrode active material include: graphite materials such as graphite (natural graphite, artificial graphite, etc.), coke, and carbon fiber; elements capable of forming an alloy with lithium, that is, elements such as silicon-based compounds, Al, Sn, Ag, Bi, Mg, Zn, In, Ge, Pb, and Ti; compounds containing elements capable of forming alloy with lithium; composites of the elements and the compounds capable of forming alloy with lithium and carbon and/or the graphite material, and nitrides containing lithium. Among these, graphite materials and silicon-based compounds are preferable, and graphite and silicon particles or silicon oxide particles as silicon-based compounds are more preferable.

The silicon oxide in the present invention is represented by SiOₓ (0 < x ≤ 2). In the present invention, as the active material layer, a composite of a silicon-based compound and a graphite material is more suitable.

When the negative electrode active material is a composite of a graphite material and a silicon-based compound, the blending ratio of the graphite material and the silicon-based compound is preferably 10 : 90 to 90 : 10, more preferably 50 : 50 to 80 : 20.

As the positive electrode active material, LiFePO₄, LiMeₓO_{y} (Me means a transition metal containing at least one of Ni, Co, and Mn. x and y mean any numbers)-based positive electrode active material is preferable.

Here, in the case of forming an electrode composition for a positive electrode, it is preferable to thicken the electrode layer to be described later because of the relationship of the capacity of LiFePO₄ or the like, but cracks tend to be easily generated by thickening the electrode layer. Thus, the electrode layer for a positive electrode is required to have excellent bending properties, and the electrode layer of the present invention contains two types of carboxymethyl cellulose and/or a salt thereof as the component A and the component B, thereby having excellent bending properties, and further having excellent balance between the bending properties of the electrode layer, the coatability of the electrode composition, and the resulting battery performance.

The content of the electrode active material in the electrode layer is usually 90 to 99 mass%, preferably 91 to 99 mass%, more preferably 92 to 99 mass%, still more preferably 95~99 mass%, particularly preferably 96 to 99 mass%, most preferably 98 to 99 mass%.

The electrode composition may contain a conductive additive as necessary. Examples of the conductive additive include conductive carbon such as carbon black, acetylene black, and Ketjen black. The content of the conductive additive in the electrode composition is usually 0.01 to 20 mass%, preferably 0.1 to 10 mass%.

The solvent to be used in the electrode composition is preferably an aqueous solvent. The type of the aqueous solvent is not particularly limited, but is preferably water, a water-soluble organic solvent, or a mixed solvent thereof, and more preferably water.

The water-soluble organic solvent is an organic solvent that dissolves in water. Examples thereof include methanol, ethanol, 2-propanol, butanol, glycerin, acetone, methyl ethyl ketone, 1,4-dioxane, N-methyl-2-pyrrolidone, tetrahydrofuran (THF), N,N-dimethylformamide (DMF), N,N-dimethylacetamide, dimethyl sulfoxide (DMSO), acetonitrile, methyl triglycol succinate diester, acetic acid, and combinations thereof.

When the mixed solvent is used as the aqueous solvent, the amount of the water-soluble organic solvent in the mixed solvent is preferably 10 mass% or more, more preferably 50 mass% or more, still more preferably 70 mass% or more. The upper limit of the amount is not limited, but is preferably 95 mass% or less, more preferably 90 mass% or less. The aqueous solvent may contain a water-insoluble organic solvent as long as the effect of the invention is not impaired.

The production conditions of the electrode composition are not particularly limited. For example, other components constituting the electrode composition are added to an aqueous solution of carboxymethyl cellulose and/or a salt thereof, and mixed with stirring as necessary.

The properties of the electrode composition are not particularly limited either. Examples thereof include a liquid form, a paste form, and a slurry form, and any form may be used.

### <Electrode for nonaqueous electrolyte secondary battery>

By applying the electrode composition onto a current collector, an electrode layer can be formed on the current collector. Examples of the application method include blade coating, bar coating, and die coating. Blade coating is preferable. For example, in the case of blade coating, a method of casting the electrode composition on a current collector using a coating device such as a doctor blade is exemplified. The stacking method is not limited to the above specific examples, and a method in which the electrode composition is discharged from an extrusion-type liquid injector having a slot nozzle and applied onto a running current collector wound around a backup roll is also exemplified. In blade coating, an electrode layer is obtained by, after casting, further performing drying by heating (the temperature is, for example, 80 to 120°C, and the heating time is, for example, 4 to 12 hours) or the like, and pressurization through roll pressing or the like as necessary.

The shape of the electrode for a nonaqueous electrolyte secondary battery of the present invention is not particularly limited, and is usually a sheet shape. The thickness (thickness of the electrode layer formed from the electrode composition excluding current collector portion) in the case of a sheet-like electrode plate is difficult to define because it depends on the makeup of the composition, production conditions, and the like, but is usually 30 to 150 µm.

### (Current collector)

As the current collector, any electric conductor that does not cause a fatal chemical change in the formed electrode or battery can be used. When the electrode is a negative electrode, a current collector for a negative electrode can be used, and when the electrode is a positive electrode, a current collector for a positive electrode can be used.

Examples of the material for the negative electrode current collector include one obtained by adhering carbon, nickel, titanium, or silver to the surface of stainless steel, nickel, copper, titanium, carbon, copper, or stainless steel. Among these, copper or a copper alloy is preferable, and copper is more preferable.

Examples of the material of the positive electrode current collector include metals such as aluminum and stainless steel, and aluminum is preferable.

Examples of the shape of the current collector include a net, a punched metal, a foam metal, and a foil processed into a plate shape. A foil processed into a plate shape is preferable.

### <Nonaqueous electrolyte secondary battery>

The electrode for a nonaqueous electrolyte secondary battery of the present invention is used as an electrode of a nonaqueous electrolyte secondary battery.

That is, the present invention also provides a nonaqueous electrolyte secondary battery. The nonaqueous electrolyte secondary battery can have a structure in which a positive electrode and a negative electrode are alternately stacked with a separator interposed therebetween and wound many times. The stack of a positive electrode, a separator, and a negative electrode wound many times is placed in a battery container, and a nonaqueous electrolyte is injected and sealed, whereby a nonaqueous electrolyte secondary battery is obtained.

The shape of the nonaqueous electrolyte secondary battery is not particularly limited, and a cylindrical shape, a square shape, a flat shape, a coin shape, a button shape, a sheet shape, or the like can be adopted. The material of the battery container is not particularly limited as long as the purpose of preventing entry of moisture into the battery can be achieved, and examples thereof include a laminate of metal, aluminum, or the like.

The separator is usually impregnated with a nonaqueous electrolyte. As the separator, for example, a microporous membrane or a nonwoven fabric made of polyolefin such as polyethylene or polypropylene can be used.

The nonaqueous electrolyte usually contains a lithium salt and a nonaqueous solvent. Examples of the lithium salt include LiPF₆, LiAsF₆, LiBF₄, and LiClO₄. Examples of the nonaqueous solvent include ethylene carbonate, diethyl carbonate, dimethyl carbonate, propylene carbonate, butylene carbonate, and methylethyl carbonate. The nonaqueous solvent may be used singly or in combination of two or more thereof. The concentration of the lithium salt to be used in the nonaqueous electrolyte can be usually 0.5 to 2.5 mol/L.

When the binder for a nonaqueous electrolyte secondary battery of the present invention is added to an electrode composition, not only the active material and the conductive additive are uniformly dispersed, but also the binding property between the active material and the current collecting foil is strong. Thus, the electrode for a nonaqueous electrolyte secondary battery and the nonaqueous electrolyte secondary battery produced according to the present invention are excellent in battery characteristics.

### Examples

Hereinafter, embodiments of the present invention will be described with reference to Examples, but the present invention is not limited to these Examples.

In the present Examples and Comparative Examples, the measurement of each index for carboxymethyl cellulose or a salt thereof is performed by the following method.

### <Method for measuring degree of carboxymethyl substitution (CM-DS)>

About 2.0 g of a sample of a carboxymethyl cellulose pulverized product was precisely weighed and put into a 300 mL conical flask having a stopper. Methanol (solution obtained by adding 100 mL of special grade concentrated nitric acid to 1000 mL of methanol) in an amount of 100 mL was added, and the mixture was shaken for 3 hours to convert carboxymethyl cellulose salt (CMC salt) into H-CMC (carboxymethyl cellulose). Bone-dry H-CMC was precisely weighed in an amount of 1.5 to 2.0 g and put into a 300 mL conical flask having a stopper. The H-CMC was wetted with 15 mL of 80% methanol, 100 mL of 0.1 N NaOH was added, and the mixture was shaken at room temperature for 3 hours. Excess NaOH was back-titrated with 0.1 N H₂SO₄ using phenolphthalein as indicator. CM-DS was calculated by the following Formula 1. 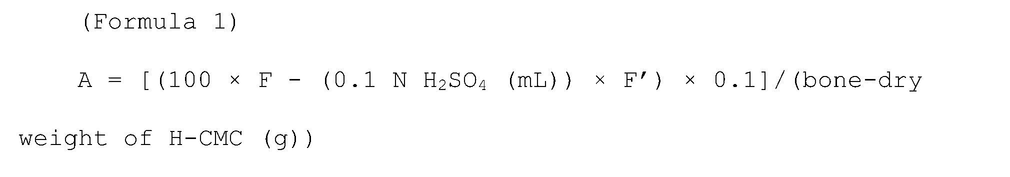 A = [(100 × F - (0.1 N H2SO4 (mL)) × F') × 0.1]/(bone-dry weight of H-CMC (g)) (Formula 1) 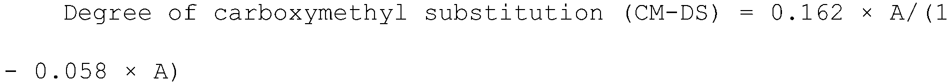 Degree of carboxymethyl substitution (CM-DS) = 0.162 × A/(1 - 0.058 × A)
A: 1N NaOH amount required to neutralize 1 g of H-CMC (mL)
F': Factor of 0.1 N H₂SO₄
F: Factor of 0.1 N NaOH

### <Viscosity>

A carboxymethylated cellulose or a salt thereof was weighed in a 1000 mL glass beaker and dispersed in 900 mL of distilled water to prepare an aqueous dispersion having a solid content of 1% (w/v). The aqueous dispersion was stirred at 25°C using a stirrer at 600 rpm for 3 hours. Thereafter, according to the method of JIS-Z-8803, the viscosity after 3 minutes was measured at a rotation speed of 30 rpm using a B-type viscometer (manufactured by Toki Sangyo Co., Ltd.).

### <Dispersion degree>

The dispersion degree of the carboxymethyl cellulose or a salt thereof was measured using a powder tester (Powder Tester PT-X, manufactured by Hosokawa Micron Corporation). Specifically, when 10 g of a sample was charged into the dispersion unit of PT-X and dropped, the dispersion degree was calculated from the amount of powder dropped on the watch glass by the following formula. 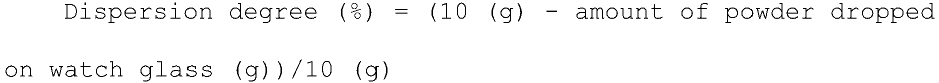 Dispersion degree (%) = (10 (g) - amount of powder dropped on watch glass (g))/10 (g)

### <Measurement of mass ratio of mass of filtration residue to dry mass of carboxymethyl cellulose dissolved in aqueous solution>

Two liters of an aqueous solution containing 0.3 mass% of the carboxymethyl cellulose or a salt thereof (mass% based on a dry mass of the carboxymethyl or a salt thereof) was prepared. This 2 liters of the aqueous solution was filtered through a 250 mesh filter (stainless steel, mesh size 63 µm) using a filter ("Sepa-rohto" manufactured by Kiriyama glass. Co.) under a reduced pressure of -200 mmHg. The residue remaining on the 250 mesh filter was air-blown and dried at a temperature of 105°C for 16 hours, and then the mass of the dried residue was measured and expressed as mass percent (ppm) with respect to the mass of carboxymethyl cellulose in the aqueous carboxymethyl cellulose solution.

Adhesion strength of the negative electrode plates 1 to 7 obtained in Examples and Comparative Examples was evaluated as follows.

### <Adhesion strength evaluation>

The negative electrode plate obtained in each of Examples and Comparative Examples was cut with a cutter to have a lateral width of 250 mm, the coated surface of the negative electrode plate and a wooden plate (300 mm in length × 200 mm in width × 3 mm in thickness) were attached with a double-sided tape (manufactured by Nitto Denko Corporation), and the force in peeling the copper foil from the coated layer using TENSILON RTC-1210A (manufactured by A & D Company, Limited) was defined as adhesion strength. The larger the value of the adhesion strength, the better the adhesion.

In addition, the dispersibility of the active material and the conductive additive in the battery binders 1 and 7 was evaluated as follows.

### <Evaluation for dispersibility of active material>

To 125 g of 0.2 mass% carboxymethyl cellulose, 5 g of SiOₓ was added, and the mixture was stirred for 30 minutes under the condition of 2,500 rpm using a stirrer. The dispersion obtained by stirring was diluted 100 times with water, and the particle size was measured with ZETASIZER 3000HSA (manufactured by Malvern Instruments). The smaller the particle size, the better the dispersibility.

### <Evaluation for dispersibility of conductive additive>

To 125 g of 0.2 mass% carboxymethyl cellulose, 0.1 g of acetylene black (manufactured by Stream Chemical Co., Ltd.) was added, and the mixture was stirred for 30 minutes under the condition of 2,500 rpm using a stirrer. The dispersion obtained by stirring was diluted 100 times with water, and the particle size was measured with ZETASIZER 3000HSA (manufactured by Malvern Instruments). The smaller the particle size, the better the dispersibility.

### (Example 1)

### (Production of CMC (a))

To a twin-screw kneader whose rotation speed was adjusted to 100 rpm, 600 parts of isopropanol and a solution obtained by dissolving 38 parts of sodium hydroxide in 80 parts of water were added, and linter pulp was charged thereto in an amount of 100 parts by dry weight obtained when dried at 100°C for 60 minutes. The mixture was stirred and mixed at 30°C for 90 minutes to prepare mercerized cellulose. While the mixture was further stirred, 46 parts of monochloroacetic acid was added, and the mixture was stirred for 30 minutes, then heated to 70°C, and subjected to carboxymethylation reaction for 90 minutes. After completion of the reaction, the reaction mixture was neutralized with acetic acid so as to have a pH of about 7, and dehydrated, dried, and pulverized to obtain a sodium salt of carboxymethyl cellulose (hereinafter, it may be referred to as "CMC (a)") having a degree of carboxymethyl substitution of 0.70, a viscosity of a 1 mass% aqueous solution of 7,900 mPa·s as measured with a B-type viscometer at 25°C, and a molecular weight of 8,000,000 to 12,000,000, a filtration residue with respect to a dry mass of the carboxymethyl cellulose dissolved in the aqueous solution of 48 ppm, and a dispersion degree of 36.1%.

### (Production of CMC (b))

To twin-screw kneader whose rotation speed adjusted to 100 rpm, 550 parts of isopropanol and a solution obtained by dissolving 45 parts of sodium hydroxide in 80 parts of water were added, and softwood pulp (manufactured by NIPPON PAPER INDUSTRIES CO., LTD., NDP-T) was charged thereto in an amount of 100 parts by dry weight obtained when dried at 100°C for 60 minutes. The mixture was stirred and mixed at 30°C for 90 minutes to prepare mercerized cellulose. While the mixture was further stirred, 50 parts of monochloroacetic acid was added, and the mixture was stirred for 30 minutes, then heated to 70°C, and subjected to carboxymethylation reaction for 90 minutes. After completion of the reaction, the reaction mixture was neutralized with acetic acid so as to have a pH of about 7, and dehydrated, dried, and pulverized to obtain a sodium salt of carboxymethyl cellulose (hereinafter, it may be referred to as "CMC (b)") having a degree of carboxymethyl substitution of 0.71, a viscosity of a 1 mass% aqueous solution of 10 mPa·s as measured with a B-type viscometer at 25°C, and a molecular weight of 395,000, a filtration residue with respect to a dry mass of the carboxymethyl cellulose dissolved in the aqueous solution of 35 ppm, and a dispersion degree of 30%.

### (Production of battery binder 1)

CMC (a) and CMC (b) described above were mixed at a weight ratio of CMC (a)/CMC (b) = 8/2 to obtain an electrode binder 1 in which the viscosity of a 1 mass% aqueous solution was 3,140 mPa·s as measured with a B-type viscometer at 25°C.

### (Production of negative electrode plate)

SiOₓ as a negative electrode active material,, acetylene black (manufactured by Stream Chemical) (hereinafter, it may be referred to as AB), the electrode binder 1, and styrene-butadiene rubber (SBR, manufactured by JSR Corporation, product number: S2910(E)-12-Na) were mixed at a solid content weight ratio of 100 : 0.5 : 1.0 : 1.5, water was added so that a slurry concentration was 45.6 mass%, and the mixture was sufficiently stirred using MAZERUSTAR (KK-250S manufactured by Kurabo Industries Ltd.) to obtain a slurry 1. This slurry was applied to a copper foil (NC-WS manufactured by Furukawa Electric Co., Ltd.) having a length 320 mm × a width 170 mm × a thickness 17 µm with an applicator and air-dried for 30 minutes, and then dried at 60°C for 30 minutes with a dryer. Further, pressing was performed under conditions of a roll circumferential speed of 50 m/min and at 5 kN using a small tabletop roll press (manufactured by TESTER SANGYO CO., LTD., SA-602) to obtain a negative electrode plate 1 having a basis weight of 19.7 g/m² and an effective discharge capacity of 2100 mAh/g.

### (Example 2)

An electrode binder 2 and a negative electrode plate 2 using the electrode binder having an effective discharge capacity of 330 mAh/g were obtained in the same manner as in Example 1, except that the active material was changed to graphite, the blending ratio of CMC (a) and CMC (b) was changed to 7.5/2.5, and the basis weight was changed to 62.9 g/m².

### (Example 3)

An electrode binder 3 and a negative electrode plate 3 using the electrode binder were obtained in the same manner as in Example 2, except that the blending ratio of CMC (a) and CMC (b) was changed to 6/4.

### (Comparative Example 1)

An electrode binder 4 and a negative electrode plate 4 using the electrode binder were obtained in the same manner as in Example 2, except that the blending ratio of CMC (a) and CMC (b) was changed to 5/5.

### (Comparative Example 2)

An electrode binder 5 and a negative electrode plate 5 using the electrode binder were obtained in the same manner as in Example 2, except that the blending ratio of CMC (a) and CMC (b) was changed to 2.5/7.5.

### (Comparative Example 3)

An electrode binder 6 and a negative electrode plate 6 using the electrode binder were obtained in the same manner as in Example 2, except that CMC (b) was used alone as CMC.

### (Comparative Example 4)

An electrode binder 7 and a negative electrode plate 7 using the electrode binder were obtained in the same manner as in Example 1, except that CMC (c) (manufactured by NIPPON PAPER INDUSTRIES CO., LTD., degree of carboxymethyl substitution: 0.9, viscosity of 1 mass% aqueous solution measured with B-type viscometer at 25°C: 3,360 mPa·s, molecular weight: 5,660,000, filtration residue: 240 ppm, dispersion degree: 14.6%) was used alone as CMC.

The evaluation results of the adhesion strength in Examples 1 to 3 and Comparative Examples 1 to 4 are shown in Table 1 below.

**[Table 1]**

| | Active material | CMC | | Conductive additive | Blending ratio active material : conductive additive : CMC : SBR | Adhesion strength (gf/cm) |
|---|---|---|---|---|---|---|
| | | Sample | 1% viscosity (mPa·s) | | | |
| Example 1 | SiOx | CMC(a)/CMC(b) =8/2 | 3140 | Acetylene black | 100 : 0.5 : 1 : 1.5 | 44.9 |
| Example 2 | Graphite | CMC(a)/CMC(b) =7.5/2.5 | 1870 | Acetylene black | 100 : 0.5 : 1 : 1.5 | 15.0 |
| Example 3 | Graphite | CMC(a)/CMC(b) =6/4 | 875 | Acetylene black | 100 : 0.5 : 1 : 1.5 | 14.0 |
| Comparative Example 1 | Graphite | CMC(a)/CMC(b) =5/5 | 362 | Acetylene black | 100 : 0.5 : 1 : 1.5 | 9.0 |
| Comparative Example 2 | Graphite | CMC(a)/CMC(b) =2.5/7.5 | 139 | Acetylene black | 100 : 0.5 : 1 : 1.5 | 9.0 |
| Comparative Example 3 | Graphite | CMC(b) | 10 | Acetylene black | 100 : 0.5 : 1 : 1.5 | 9.0 |
| Comparative Example 4 | SiOx | CMC(c) | 3360 | Acetylene black | 100 : 0.5 : 1 : 1.5 | 20.4 |

The evaluation results of the dispersibility in the battery binders 1 and 7 are shown in Table 2 below as Experimental Examples 1 to 4.

**[Table 2]**

| | Dispersion | CMC | | Dispersibility evaluation |
|---|---|---|---|---|
| | | Sample | 1% viscosity (mPa·s) | Particle size (µm) |
| Experimental Example 1 | Acetylene black | CMC(a)/CMC(b) =8/2 | 3140 | 30 |
| Experimental Example 2 | SiOx | CMC(a)/CMC(b) =8/2 | 3140 | 9.2 |
| Experimental Example 3 | Acetylene black | CMC(c) | 3360 | Separated |
| Experimental Example 4 | SiOx | CMC(c) | 3360 | 19.8 |

As shown in Table 1, when SiOₓ was used as the active material, Example 1 using the electrode binder of the present invention was better in adhesion strength than Comparative Example 4. Also when graphite was used as the active material, Examples 2 and 3 in which the electrode binder of the present invention was used were better in adhesion strength than Comparative Examples 1 to 3. The reason of the electrode plate of Comparative Example 4 in which SiOₓ was used as the active material being better in adhesion strength than the electrode plates of Examples 2 to 3 in which graphite was used as the active material is considered to be due to the interaction between the hydroxyl group on the surface of SiOₓ and the carboxyl group of CMC.

As shown in Table 2, in Experimental Examples 1 and 2 in which the electrode binder of the present invention was used, and acetylene black and SiOₓ were respectively used as the dispersion, dispersibility was improved (particle size was reduced) as compared with Experimental Examples 3 and 4 in which the electrode binder of the present invention was not used.

In this manner, the electrode binder of the present invention was excellent in adhesion strength with respect to the current collector regardless of the active material, and also excellent in dispersibility of the active material and the conductive additive.

In addition, bending properties of the positive electrode plates 1 to 3 obtained in Example 4 and Comparative Example 5 and 6 were measured as follows, and coatability of the positive electrode slurries 1 to 3 obtained in Example 4 and Comparative Examples 5 and 6 was evaluated as follows. Further, the battery performance was evaluated as follows using the positive electrode plates 1 to 3 obtained in Example 4 and Comparative Examples 5 and 6.

### <Bending property>

Each of the positive electrode plates 1 to 3 obtained in Example 4 and Comparative Examples 5 and 6 was cut out to a width of 2.5 cm, and the bending properties were evaluated with a cylindrical mandrel bending tester. That is, the diameter of the mandrel when the coating film was cracked is shown as an evaluation value. The smaller this value is, the more excellent the bending properties are.

### <Coatability>

Each of the positive electrode slurries 1 to 3 obtained in Example 4 and Comparative Examples 5 and 6 was coated on an aluminum foil and air-dried, and then the presence or absence of coating unevenness and streaks was visually evaluated according to the following criteria.
A: Unevenness and streaks are hardly observed on the surface of the coating layer, and coatability is excellent.
B: Unevenness and streaks are observed on the surface of the coating layer, and coatability is poor.

### <Permeability of electrolytic solution>

Each of the positive electrode plates 1 to 3 obtained in Example 4 and Comparative Examples 5 and 6 was cut into a circle having a diameter of 15.9 mm, and vacuum-dried at 120°C for 12 hours. Thereafter, 1 drop of 1.0MLiPF₆EC/DEC (manufactured by Sigma Aldrich) as an electrolytic solution was dropped on the coating surface using a 200 µL pipette tip in a glove box, and the time until the electrolytic solution permeated (electrolytic solution permeation time) was measured. The shorter the electrolytic solution penetration time, the better the permeability.

### <Capacity retention rate>

The coin-type nonaqueous electrolyte secondary batteries 1 to 3 obtained in Example 4 and Comparative Examples 5 and 6 were subjected to a charge-discharge rate test. Specifically, BTS2004 manufactured by NAGANO & Co., Ltd. was used, and 52 cycles were performed in a thermostatic bath at 25°C using each coin-type nonaqueous electrolyte secondary battery in the order of charge treatment and discharge treatment as 1 cycle of charging and discharging. As a condition of the charge treatment, a constant current constant voltage (CC-CV) method (CC current 0.2 C, CV voltage 4.2 V, termination current 0.02 C) was used in all the cycles.

As a condition of the discharge treatment, the termination voltage was set to 3.0 V. In the first 1 cycle, the constant current of the discharge treatment was performed at 0.2 C, and after the discharging, the discharge capacity (mAh) after 1 cycle was measured and regarded as the initial capacity.

Thereafter, until the 52nd cycle, a constant current of the discharge treatment was set as described below, and the discharge capacity (mAh) was measured after discharging in each cycle.

The constant current of the discharge treatment in each cycle is as follows.
Second to 10th cycle: constant current of discharge treatment 0.2 C
11th to 20th cycle: constant current of discharge treatment 1 C
21st cycle: constant current of discharge treatment 0.2 C
22nd to 31st cycle: constant current of discharge treatment 2 C
32nd cycle: constant current of discharge treatment 0.2 C
33rd to 42nd cycle: constant current of discharge treatment 3 C
43rd to 52nd cycle: constant current of discharge treatment 0.2 C

In the charge-discharge rate test described above, the discharge capacity after 20 cycles was defined as a 1 C rate capacity, the discharge capacity after 31 cycles was defined as a 2 C rate capacity, and as capacity retention rate, 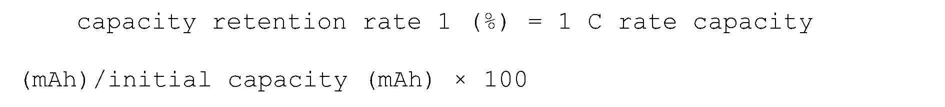 capacity retention rate 1 (%) = 1 C rate capacity (mAh)/initial capacity (mAh) × 100 and 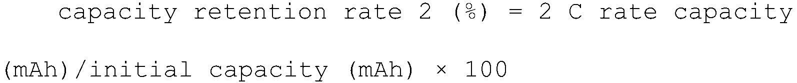 capacity retention rate 2 (%) = 2 C rate capacity (mAh)/initial capacity (mAh) × 100 were determined.

### (Example 4)

### (Production of positive electrode plate)

LiFePO₄ (hereinafter, it may be referred to as "LFP") as a positive electrode active material, acetylene black (manufactured by Stream Chemical), the electrode binder 1, and styrene-butadiene rubber (SBR, manufactured by JSR Corporation, product number: S2910(E)-12-Na) were mixed at a solid content weight ratio of 92 : 4 : 1 : 3, water was added so that a slurry concentration was 59.1 mass%, and the mixture was sufficiently stirred using MAZERUSTAR (KK-250S manufactured by Kurabo Industries Ltd.) to obtain a positive electrode slurry 1. This slurry was applied to a copper foil (NC-WS manufactured by Furukawa Electric Co., Ltd.) having a length 320 mm × a width 170 mm × a thickness 17 µm with an applicator and air-dried for 30 minutes, and then dried at 60°C for 30 minutes with a dryer. Further, pressing was performed under conditions of a roll circumferential speed of 50 m/min and at 5 kN using a small tabletop roll press (manufactured by TESTER SANGYO CO., LTD., SA-602) to obtain a positive electrode plate 1 having a basis weight of 27.2 g/m² and an effective discharge capacity of 170 mAh/g.

### (Production of negative electrode plate for positive electrode evaluation)

Artificial graphite as a negative electrode active material, AB, CMC (a), and styrene-butadiene rubber (SBR, manufactured by JSR Corporation, product number: S2910(E)-12-Na) were mixed at a solid content weight ratio of 100 : 0.5 : 1.0 : 1.5, water was added so that a slurry concentration was 45.6 mass%, and the mixture was sufficiently stirred using MAZERUSTAR (KK-250S manufactured by Kurabo Industries Ltd.) to obtain a slurry 1. This slurry was applied to a copper foil (NC-WS manufactured by Furukawa Electric Co., Ltd.) having a length 320 mm × a width 170 mm × a thickness 17 µm with an applicator and air-dried for 30 minutes, and then dried at 60°C for 30 minutes with a dryer. Further, pressing was performed under conditions of a roll circumferential speed of 50 m/min and at 5 kN using a small tabletop roll press (manufactured by TESTER SANGYO CO., LTD., SA-602) to obtain a negative electrode plate having a basis weight of 13.0 g/m² and an effective discharge capacity of 330 mAh/g.

### (Production of coin-type nonaqueous electrolyte secondary battery)

The obtained positive electrode plate 1 and the negative electrode plate for positive electrode evaluation were punched into a circle having a diameter of 15.9 mm, and the punched negative electrode plate and positive electrode plate were vacuum-dried at 120°C for 12 hours.

A separator (polypropylene separator with a thickness of 20 µm manufactured by CS Tech) was punched into a circle having a diameter of 17 mm in the same manner and vacuum-dried at 60°C for 12 hours.

Thereafter, the negative electrode plate was placed in a stainless steel circular dish type container having a diameter of 20.0 mm, then the separator, the positive electrode plate 1, a spacer (diameter 15.5 mm, thickness 1 mm), and a stainless steel washer (manufactured by Hohsen Corp.) were stacked in this order, and then 300 µL of an electrolytic solution (1 mol/L of LiPF₆, volume ratio between ethylene carbonate and diethyl carbonate 1 : 1) was added to the circular dish type container. The obtained material was covered with a stainless steel cap via a polypropylene packing and sealed with a coin battery crimping machine (Hohsen Corp.) to obtain a coin-type nonaqueous electrolyte secondary battery 1.

### (Comparative Example 5)

A positive electrode slurry, a positive electrode plate, and a coin-type nonaqueous electrolyte secondary battery were produced in the same manner as in Example 4, except that CMC (a) was used alone in place of the electrode binder 1, whereby a positive electrode slurry 2, a positive electrode plate 2, and a coin-type nonaqueous electrolyte secondary battery 2 were obtained.

### (Comparative Example 6)

A positive electrode slurry, a positive electrode plate, and a coin-type nonaqueous electrolyte secondary battery were produced in the same manner as in Example 4, except that CMC (b) was used alone in place of the electrode binder 1, whereby a positive electrode slurry 3, a positive electrode plate 3, and a coin-type nonaqueous electrolyte secondary battery 3 were obtained.

The measurement or evaluation results of the bending properties, coatability, and capacity retention rate in Example 4 and Comparative Examples 5 and 6 are shown in Table 3 below.

**[Table 3]**

| | CMC | | | Blending ratio of positive electrode plate | Bending property (mm) | Coatability | Capacity retention rate (%) | | Electrolytic solution permeation time (min) |
|---|---|---|---|---|---|---|---|---|---|
| | Sample | Viscosity (mPa·s) | DS (mol/C6) | LFP:AB:CMC:SBR | | | 1C rate capacity (mAh)/initial capacity (mAh) | 2C rate capacity (mAh)/initial capacity (mAh) | |
| Example 4 | CMC(a)/CMC(b) =8/2 | 3300 | 0.70 | 92:4:1:3 | 3 | A | 55 | 8 | 3 |
| Comparative Example 5 | CMC(a) | 7900 | 0.70 | 92:4:1:3 | 8 | A | 4 | 0 | Not permeated |
| Comparative Example 6 | CMC(b) | 10 | 0.70 | 92:4:1:3 | 4 | B | 27 | 0 | 5 |

As shown in Table 3, the positive electrode slurry using the binder for a nonaqueous electrolyte secondary battery electrode, the binder including a component A: carboxymethyl cellulose and/or a salt thereof having a viscosity of a 1 mass% aqueous solution of 1000 to 20,000 mPa·s as measured with a B-type viscometer (30 rpm) at 25°C and a large molecular weight of 6,000,000 or more, and a component B: carboxymethyl cellulose and/or a salt thereof having a viscosity of a 1 mass% aqueous solution of 1 to 500 mPa·s as measured with a B-type viscometer (30 rpm) at 25°C, wherein a blending ratio of the component A and the component B in the binder for a nonaqueous electrolyte secondary battery electrode is the component A/the component B = 90/10 to 55/45 has a good coatability, the positive electrode plate obtained by using the positive electrode slurry has good bending properties, and the nonaqueous electrolyte secondary battery using the positive electrode plate has a good capacity retention rate and has a good electrolytic solution permeability.

## Claims

1. A binder for a nonaqueous electrolyte secondary battery electrode, the binder comprising:
a component A: carboxymethyl cellulose and/or a salt thereof having a viscosity of a 1 mass% aqueous solution of 1,000 to 20,000 mPa·s as measured with a B-type viscometer (30 rpm) at 25°C and a molecular weight of 6,000,000 or more; and
a component B: carboxymethyl cellulose and/or a salt thereof having a viscosity of a 1 mass% aqueous solution of 1 to 500 mPa·s as measured with a B-type viscometer (30 rpm) at 25°C,
wherein a blending ratio of the component A and the component B in the binder for a nonaqueous electrolyte secondary battery electrode is the component A/the component B = 90/10 to 55/45.

2. The binder for a nonaqueous electrolyte secondary battery electrode according to claim 1, wherein a degree of carboxymethyl substitution per anhydroglucose unit of each of the component A and the component B is 0.5 to 1.2.

3. The binder for a nonaqueous electrolyte secondary battery electrode according to claim 1, wherein the component B has a dispersion degree of 20 to 60% as measured using a powder tester.

4. An electrode composition for a nonaqueous electrolyte secondary battery, the electrode composition comprising the binder for a nonaqueous electrolyte secondary battery electrode according to claim 1.

5. An electrode for a nonaqueous electrolyte secondary battery, the electrode comprising the binder for a nonaqueous electrolyte secondary battery electrode according to claim 1.

6. A nonaqueous electrolyte secondary battery comprising the binder for a nonaqueous electrolyte secondary battery electrode according to claim 1.
